(19) Europäisches Patentamt
European Patent Office
Office européen des brevets

(11) **EP 4 559 680 A1**

(12) **EUROPEAN PATENT APPLICATION**

(43) Date of publication:
**28.05.2025  Bulletin 2025/22**

(21) Application number: **23211472.8**

(22) Date of filing: **22.11.2023**

(51) International Patent Classification (IPC):
**B41F 13/12** *(2006.01)*    **B41F 13/02** *(2006.01)*
**B41F 33/00** *(2006.01)*    **B41F 9/02** *(2006.01)*
**B65H 23/04** *(2006.01)*

(52) Cooperative Patent Classification (CPC):
**B41F 9/025; B41F 13/025; B41F 13/12;
B41F 33/00; B65H 23/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventor: **RAN, Yi Bing
Beijing, 100025 (CN)**

(74) Representative: **Isarpatent
Patent- und Rechtsanwälte
Barth Hassa Peckmann & Partner mbB
Friedrichstraße 31
80801 München (DE)**

(54)  **METHOD FOR CONTROLLING REGISTER ERROR, APPARATUS FOR CONTROLLING REGISTER ERROR, ELECTRONIC DEVICE, AND STORAGE MEDIUM**

(57)   A method for controlling a register error, an electronic device, and a storage medium are provided. The method includes: acquiring a control volume and a register error of a current gravure unit at a first moment, the control volume being used for indicating a set value of a rotational angular velocity when the gravure unit is controlled to operate; acquiring a control volume of at least one previous gravure unit at the first moment, the previous gravure unit being located prior to the current gravure unit as per a printing sequence; predicting, via an error prediction model, a register error of the current gravure unit at a second moment based on the control volume and the register error of the current gravure unit at the first moment, and the control volume of the at least one previous gravure unit at the first moment, to obtain a predicted register error of the current gravure unit at the second moment, the second moment following the first moment; and determining a control volume of the current gravure unit at the second moment based on the predicted register error of the current gravure unit at the second moment. The method can reduce the register error of an intaglio printing process.

FIG.1

EP 4 559 680 A1

**Description**

**TECHNICAL FIELD**

The present disclosure relates to the technical field of printing, and particularly relates to a method for controlling a register error, an apparatus for controlling a register error, an electronic device, and a storage medium.

**BACKGROUND**

Intaglio printing, as an important printing method, is widely used in the printing of paper, film, aluminum foil and other materials as well as in the printing of flexible electronic materials. A printed product of intaglio printing is usually a combination of multiple color patterns that are sequentially printed onto a substrate by different gravure units. Influenced by many factors in the printing process, the different color patterns may not be aligned, which is called register error. The register error is a key indicator of the quality of the printed product, and needs to be controlled to within a target range during printing.

At present, a rotational velocity of a gravure roller in the gravure unit is controlled according to a Proportional Integration Differentiation (PID) algorithm, to control the register error.

However, due to factors such as upstream color unit coupling, paper tension disturbance between gravure units, transmission hysteresis, and slippage, it is difficult for PID feedback control to achieve accurate and stable control effects, thus resulting in significant register errors.

**SUMMARY**

In view of the above problems, the method for controlling a register error, the apparatus for controlling a register error, the electronic device, and the storage medium provided in the present disclosure can reduce register errors in an intaglio printing process.

According to an embodiment of the present disclosure, a method for controlling a register error is provided. The method includes: acquiring a control volume and a register error of a current gravure unit at a first moment (in time), the control volume being used for indicating a set value of a rotational angular velocity when the gravure unit is controlled to operate; acquiring a control volume of at least one previous gravure unit at the first moment, the previous gravure unit being located prior to the current gravure unit as per a printing sequence; predicting, via an error prediction model, a register error of the current gravure unit at a second moment (in time) based on the control volume and the register error of the current gravure unit at the first moment, and the control volume of the at least one previous gravure unit at the first moment, to obtain a predicted register error of the current gravure unit at the second moment, the second moment following the first moment; and determining a control volume of the current gravure unit at the second moment based on the predicted register error of the current gravure unit at the second moment.

According to an embodiment of the present disclosure, an apparatus for controlling a register error is provided. The apparatus includes: a first acquisition unit configured to acquire a control volume and a register error of a current gravure unit at a first moment, the control volume being used for indicating a set value of a rotational angular velocity when the gravure unit is controlled to operate; a second acquisition unit configured to acquire a control volume of at least one previous gravure unit at the first moment, the previous gravure unit being located prior to the current gravure unit as per a printing sequence; a prediction unit configured to predict, via an error prediction model, a register error of the current gravure unit at a second moment based on the control volume and the register error of the current gravure unit at the first moment, and the control volume of the at least one previous gravure unit at the first moment, to obtain a predicted register error of the current gravure unit at the second moment, the second moment following the first moment; and a control unit configured to determine a control volume of the current gravure unit at the second moment based on the predicted register error of the current gravure unit at the second moment.

According to an embodiment of the present disclosure, an electronic device is provided. The electronic device includes: a processor, a memory, a communication interface, and a bus, where the processor, the memory, and the communication interface are configured to communicate with each other through the bus; and the memory is configured to store at least one executable instruction, where the instruction is executed to cause the processor to execute operations corresponding to the method for controlling a register error according to the above first aspect.

According to an embodiment of the present disclosure, a computer-readable storage medium is provided. The computer-readable storage medium stores computer instructions thereon, wherein the computer instructions, when executed by a processor, cause the processor to execute the method for controlling a register error according to the above first aspect.

According to an embodiment of the present disclosure, a computer program product is provided. The computer program product is tangibly stored on a computer-readable medium, and includes computer-executable instructions, where the computer-executable instructions, when executed, cause at least one processor to execute the method for controlling a register error according to the above first aspect.

As can be seen from the above technical solutions, the error prediction model can obtain a predicted register error of a current gravure unit at a second moment based on a control volume and a register error of the current gravure unit at a first moment, and a control volume of at least one previous gravure unit of the current gravure unit at the first moment, further can determine a control volume of the current gravure unit at the second moment based on the predicted register error of the current gravure unit at the second moment, and control a rotational angular velocity of the current gravure unit at the second moment based on the determined control volume, thereby resulting in a small register error of the current gravure unit at the second moment. Constructed by data-driven modeling, the error prediction model can accurately characterize various factors caused by the register error and ensure the accuracy of the predicted register error. The control volume is determined based on the predicted register error, and then is used to control the rotational angular velocity of the current gravure unit at the second moment, thereby resulting in a small register error of the current gravure unit at the second moment, and improving the quality of printed products.

**BRIEF DESCRIPTION OF DRAWINGS**

FIG. 1 is a flowchart of a method for controlling a register error in an embodiment of the present disclosure;
FIG. 2 is a schematic diagram of an intaglio printing system in an embodiment of the present disclosure;
FIG. 3 is a flowchart of a method for constructing an error prediction model in an embodiment of the present disclosure;
FIG. 4 is a schematic diagram of an error prediction model in an embodiment of the present disclosure;
FIG. 5 is a schematic diagram of the error prediction model in another embodiment of the present disclosure;
FIG. 6 is a schematic diagram of a register error control process in an embodiment of the present disclosure;
FIG. 7 is a schematic diagram of an apparatus for controlling a register error in an embodiment of the present disclosure; and
FIG. 8 is a schematic diagram of an electronic device in an embodiment of the present disclosure.

List of reference numerals:

| | | |
|---|---|---|
| 100: Method for controlling a register error | 200: Intaglio printing system | 300: Method for constructing an error prediction model |
| 400: Error prediction model | 700: Apparatus for controlling a register error | 800: Electronic device |
| 201: Substrate | $U_k$: Current gravure unit | $U_{k-1}$: First previous gravure unit |
| $U_{k-2}$: Second previous gravure unit | 601: Register error controller | 602: Current gravure unit |
| 701: First acquisition unit | 702: Second acquisition unit | 703: Prediction unit |
| 704: Control unit | 802: Processor | 804: Communication interface |
| 806: Memory | 808: Bus | 810: Program |
| 101-104: Method steps | 301-305: Method steps. | |

**DESCRIPTION OF EMBODIMENTS**

To enable those skilled in the art to better understand the technical solutions of embodiments of the present disclosure, the technical solutions of the embodiments of the present disclosure will be clearly and completely described below with reference to the drawings in the embodiments of the present disclosure. Apparently, the described embodiments are merely a part, instead of all, of the embodiments of the present disclosure. All other embodiments obtained by those of ordinary skills in the art based on some embodiments among the embodiments of the present disclosure shall be encompassed within the scope of protection of the embodiments of the present disclosure.

As mentioned above, in an intaglio printing process, in order to improve the quality of the printed products, a rotational velocity of a gravure roller in a gravure unit needs to be dynamically adjusted to control a register error. At present, a rotational velocity of the gravure roller in the gravure unit at a next moment is determined based on a PID algorithm with a register error at a current moment as an input of the PID algorithm, and then the gravure roller is controlled to rotate at the rotational velocity outputted from the PID algorithm. However, influenced by a plurality of factors such as upstream color unit coupling, paper tension disturbance between gravure units, transmission hysteresis, and slippage, the rotational velocity of the gravure roller controlled by PID feedback has poor accuracy and stability, thereby resulting in significant register errors.

In an embodiment of the present disclosure, an error prediction model may be constructed by data-driven modeling, to predict, via the error prediction module, a register error of a current gravure unit at a next moment with a control volume and a register error of the current gravure unit at a current moment, and a control volume of a previous gravure unit at the current moment as at least partial inputs of the error prediction model, and then determine a control volume of the current gravure unit at the next moment based on the prediction result. The error prediction model constructed by purely data-driven modeling can accurately characterize a mapping relationship between register errors and model inputs, then accurately predict the register errors, and determine a control volume of the gravure unit at a future moment based on the prediction result, to reduce or eliminate the register errors, thereby improving the quality of the printed products.

The method for controlling a register error, the apparatus for controlling a register error, the electronic device, and the storage medium provided in the embodiments of the present disclosure will be detailed below with reference to the drawings.

Method for controlling a register error

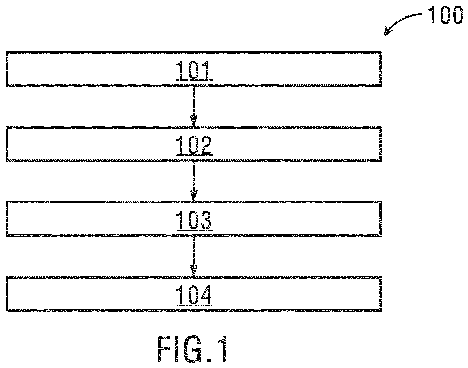

FIG. 1 is a flowchart of a method for controlling a register error in an embodiment of the present disclosure. As shown in FIG. 1, the method 100 for controlling a register error includes the following steps:

Step 101: acquiring a control volume and a register error of a current gravure unit at a first moment.

An intaglio printing system may include a plurality of gravure units. During intaglio printing, a substrate passes through each of the gravure units in sequence, and each gravure unit may print a color pattern on the substrate. In order to print a desired pattern on the substrate, different gravure units need to print the patterns at corresponding positions on the substrate. If an offset of the printing position of the pattern arises, a register error will be caused. According to a passage sequence of the substrate, a first gravure unit in the intaglio printing system first prints a pattern on the substrate. The pattern printed by the first gravure unit does not have any position offset, that is, the first gravure unit does not have a register error. Therefore, the current gravure unit herein may be any gravure unit in the intaglio printing system except the first gravure unit.

It should be noted that in the embodiments of the present disclosure, the register error refers to a longitudinal register error, i.e., a register error in the motion direction of the substrate, and a horizontal register error is beyond the scope of the embodiments of the present disclosure.

In a printing process of the intaglio printing system, the register errors of the gravure units will dynamically change. Therefore, there is a need to dynamically adjust control volumes of the gravure units to control the gravure units so as to have small register errors. Therefore, control cycles may be preset, and the control volumes of the gravure units may be adjusted at the beginning of each of the control cycles. The first moment may be a starting moment of a current control cycle.

A control volume is used for indicating a set value of a rotational angular velocity of a gravure roller in a gravure unit. In the printing process of the intaglio printing system, based on a control volume of a gravure unit, a gravure roller in the gravure unit is controlled to rotate at a corresponding rotational angular velocity. It should be noted that the control volume is the set value of the rotational angular velocity, but thereby may be a certain offset between an actual rotational angular velocity of the gravure roller and the control volume.

The control volume of the current gravure unit at the first moment is known/available, and the register error of the current gravure unit at the first moment can be measured.

Step 102: acquiring a control volume of at least one previous gravure unit at the first moment.

In the intaglio printing system, each gravure unit prints a pattern onto the substrate in sequence, and the printing sequence of each gravure unit is the same as the sequence in which the substrate passes through each gravure unit. A gravure unit located prior to the current gravure unit as per the printing sequence is a previous gravure unit. The previous gravure unit of the current gravure unit may be a plurality of consecutive gravure units, and the current gravure unit is adjacent to a last gravure unit among the plurality of consecutive gravure units.

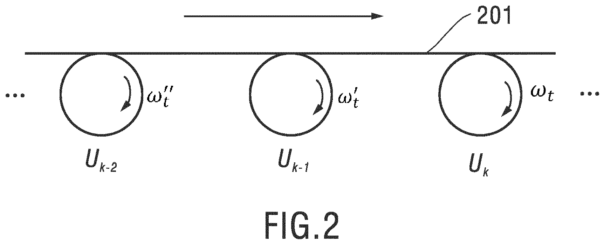

FIG. 2 is a schematic diagram of an intaglio printing system in an embodiment of the present disclosure. As shown in FIG. 2, the intaglio printing system 200 includes a plurality of gravure units, and a substrate 201 moves in an arrow direction shown in the figure. When the current gravure unit is a gravure unit $U_k$, a gravure unit $U_{k-1}$ and a gravure unit $U_{k-2}$ are each a previous gravure unit of the current gravure unit.

The control volume of the previous gravure unit at the first moment is known since the first moment is a current moment.

Step 103: predicting, via an error prediction model, a register error of the current gravure unit at a second moment based on the control volume and the register error of the current gravure unit at the first moment, and the control volume of the at least one previous gravure unit at the first moment, to obtain a predicted register error of the current gravure unit at the second moment.

The error prediction model may be a pre-trained neural network model, for example, the error prediction model may be obtained by training an initial model based on a Recurrent Neural Network (RNN). The error prediction model can predict the register error of the gravure unit. Inputs of the error prediction model include the control volume and the register error of the current gravure unit at the first moment, and the control volume of the at least one previous gravure unit at the first moment. An output of the error prediction model includes the predicted register error of the current gravure unit at the second moment. When the first moment is the current moment, and the second moment is a future moment following the first moment, the error prediction model outputs a predicted value of the register error of the current gravure unit at the second moment.

Step 104: determining a control volume of the current gravure unit at the second moment based on the predicted register error of the current gravure unit at the second moment.

The control volume of the current gravure unit at the second moment can be determined based on the predicted register error of the current gravure unit at the second moment, to control a rotational angular velocity of the current gravure unit at the second moment based on the determined control volume, so that the current gravure unit has a small register error at the second moment.

In the embodiment of the present disclosure, the error prediction model can obtain a predicted register error of a current gravure unit at a second moment based on a control volume and a register error of the current gravure unit at a first moment, and a control volume of at least one previous gravure unit of the current gravure unit at the first moment, further can determine a control volume of the current gravure unit at the second moment based on the predicted register error of the current gravure unit at the second moment, and control a rotational angular velocity of the current gravure unit at the second moment based on the determined control volume, thereby resulting in a small register error of the current gravure unit at the second moment. Constructed by data-driven modeling, the error prediction model can accurately characterize various factors caused by the register error and ensure the accuracy of the predicted register error. The control volume is determined based on the predicted register error, and then is used to control the rotational angular velocity of the current gravure unit at the second moment, thereby resulting in a small register error of the current gravure unit at the second moment, and improving the quality of the printed products.

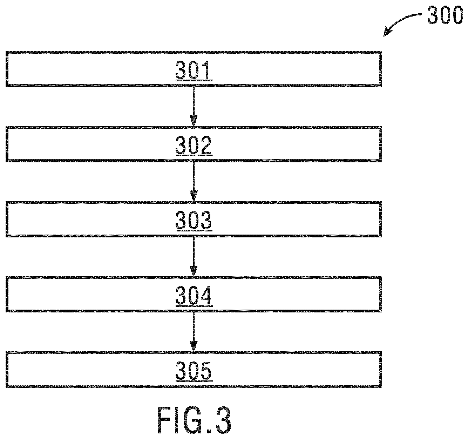

In a possible implementation, an intermediate model can be trained based on control volumes of the current gravure unit and the previous gravure unit at a plurality of historical moments, and the register errors of the current gravure unit at the plurality of historical moments, and then the error prediction model can be obtained based on the intermediate model. FIG. 3 is a flowchart of a method for constructing an error prediction model in an embodiment of the present disclosure. As shown in FIG. 3, the method 300 for constructing an error prediction model includes the following steps:

Step 301: acquiring a first control volume sequence.

The first control volume sequence includes the control volumes of the current gravure unit at the plurality of historical moments. The historical moments precede the first moment. When the first moment is a starting moment of the current control cycle, each of the historical moments may be a starting moment of a historical control cycle. The plurality of historical moments may include a starting moment of each control cycle among a plurality of consecutive control cycles. For example, as shown in FIG. 2, the first control volume sequence is $\omega_{t-L}$, $\omega_{t-L+1}$, $\cdots$, $\omega_{t-2}$, $\omega_{t-1}$, $\omega_t$, where $\omega_t$ is a control volume of a current gravure unit $U_k$ at a moment t, $\omega_{t-1}$ is a control volume of the current gravure unit $U_k$ at a moment t-1, $\omega_{t-2}$ is a control volume of the current gravure unit $U_k$ at a moment t-2, $\omega_{t-L+1}$ is a control volume of the current gravure unit $U_k$ at a moment t-L+1, and $\omega_{t-L}$ is a control volume of the current gravure unit $U_k$ at a moment t-L.

Step 302: acquiring a second control volume sequence.

The second control volume sequence includes control volumes of each of the previous gravure unit at the plurality of historical moments. The second control volume sequence may include a plurality of subsequences with each previous gravure unit corresponding to one of the subsequences. The subsequence includes control volumes of the corresponding previous gravure unit at the plurality of historical moments. It should be noted that the plurality of historical moments corresponding to the control volumes included in the subsequence is the same as the plurality of historical moments corresponding to the control volumes included in the first control volume sequence, that is, each subsequence includes a control volume of the corresponding previous gravure unit at a historical moment corresponding to any control volume in the first control volume sequence.

For example, as shown in FIG. 2, the second control volume sequence includes a subsequence 1 and a subsequence 2, where the subsequence 1 includes control volumes of a previous gravure unit $U_{k-1}$ at the plurality of historical moments, and the subsequence 2 includes control volumes of a previous gravure unit $U_{k-2}$ at the plurality of historical moments.

The subsequence 1 is $\omega'_{t-L}$, $\omega'_{t-L+1}$, $\cdots$, $\omega'_{t-2}$, $\omega'_{t-1}$, $\omega'_t$, where $\omega'_t$ is a control volume of the previous gravure unit $U_{k-1}$ at the moment t, $\omega'_{t-1}$ is a control volume of the gravure unit $U_{k-1}$ at the moment t-1, $\omega'_{t-2}$ is a control volume of the current gravure unit $U_{k-1}$ at the moment t-2, $\omega'_{t-L+1}$ is a control volume of the current gravure unit $U_{k-1}$ at the moment t-L+1, and $\omega'_{t-L}$ is a control volume of the current gravure unit $U_{k-1}$ at the moment t-L.

The subsequence 2 is $\omega''_{t-L}, \omega''_{t-L+1}, \cdots, \omega''_{t-2}, \omega''_{t-1}, \omega''_t$, where $\omega''_t$ is a control volume of the previous gravure unit $U_{k-2}$ at the moment t, $\omega''_{t-1}$ is a control volume of the previous gravure unit $U_{k-2}$ at the moment t-1, $\omega''_{t-2}$ is a control volume of the previous gravure unit $U_{k-2}$ at the moment t-2, $\omega''_{t-L+1}$ is a control volume of the previous gravure unit $U_{k-2}$ at the moment t-L+1, and $\omega''_{t-L}$ is a control volume of the previous gravure unit $U_{k-2}$ at the moment t-L.

Step 303: acquiring a register error sequence.

The register error sequence may include register errors of the current gravure unit at a plurality of historical moments. The plurality of historical moments corresponding to the register errors included in the register error sequence is the same as the plurality of historical moments corresponding to the control volumes included in the first control volume sequence, that is, the register error sequence includes a register error of the current gravure unit at a historical moment corresponding to any control volume in the first control volume sequence.

For example, when the first control volume sequence is $\omega_{t-L}, \omega_{t-L+1}, \cdots, \omega_{t-2}, \omega_{t-1}, \omega_t$, the register error sequence is $E_{t-L}, E_{t-L+1} \cdots, E_{t-2}, E_{t-1}, E_t$, where $E_t$ is a register error of the current gravure unit $U_k$ at the moment t, $E_{t-1}$ is a register error of the current gravure unit $U_k$ at the moment t-1, $E_{t-2}$ is a register error of the current gravure unit $U_k$ at the moment t-2, $E_{t-L+1}$ is a register error of the current gravure unit $U_k$ at the moment t-L+1, and $E_{t-L}$ is a register error of the current gravure unit $U_k$ at the moment t-L.

Step 304: training an intermediate model with the first control volume sequence, the second control volume sequence, and the register error sequence as inputs of the intermediate model.

Based on the first control volume sequence, the second control volume sequence, and the register error sequence, a training sample may be constructed. The training sample is characterized by the first control volume sequence, the second control volume sequence, and the register error sequence, and is tagged with a register error of the current gravure unit at a moment next to a latest historical moment among the plurality of historical moments. For example, the training sample may be characterized by the first control volume sequence $(\omega_{t-L}, \omega_{t-L+1}, \cdots, \omega_{t-2}, \omega_{t-1}, \omega_t)$, the subsequence 1 $(\omega'_{t-L}, \omega'_{t-L+1}, \cdots, \omega'_{t-2}, \omega'_{t-1}, \omega'_t)$, the subsequence 2 $(\omega''_{t-L}, \omega''_{t-L+1}, \cdots, \omega''_{t-2}, \omega''_{t-1}, \omega''_t)$, and the register error sequence $(E_{t-L}, E_{t-L+1} \cdots, E_{t-2}, E_{t-1}, E_t)$, and is tagged with a register error of the current gravure unit at the moment t+1.

A plurality of training samples can be constructed by changing the plurality of historical moments relative to the first moment. Different training samples correspond to different historical moment spans. For example, a historical moment span corresponding to a training sample is from the moment $t - L$ to the moment $t$, while a historical moment span corresponding to another training sample is from the moment $t - L - 1$ to the moment $t - 1$.

The intermediate model can be trained based on the plurality of constructed training samples. Compared with the historical moment span corresponding to the inputs of the intermediate model, the output of the intermediate model is a register error of the current gravure unit at a future moment. The intermediate model may be a RNN model. A network type of the intermediate model is not limited in the embodiments of the present disclosure.

It should be noted that in the embodiments of the present disclosure, the moment t is a historical moment relative to the first moment, and the moment t may not be adjacent to the first moment.

Step 305: obtaining the error prediction model based on the intermediate model.

As can be appreciable from the training process of the intermediate model, the register error of the current gravure unit at the future moment can be predicted via the intermediate model. Therefore, the error prediction model may be determined based on the intermediate model, for example, the intermediate model may be directly determined as the error prediction model, or the intermediate model may be transformed to obtain the error prediction model.

In the embodiments of the present disclosure, an intermediate model that can predict the register error of the current gravure unit is trained based on the control volumes and register errors of the current gravure unit at the plurality of historical moments, and the control volumes of a previous gravure unit at the plurality of historical moments. Then the error prediction model for predicting the register error of the current gravure unit is obtained based on the intermediate model. The model construction process is simple and can ensure that the obtained error prediction model can accurately predict the register error of the current gravure unit given that the intermediate model is constructed by purely data-driven modeling without the need for understanding the mechanism of the intaglio printing system, without the need for guidance by specialized mechanism, and without the need for making ideal assumptions.

In a possible implementation, the trained intermediate model may be determined as the error prediction model.

When the intermediate model is determined as the error prediction model, inputs of the error prediction model may include the control volumes and register errors of the current gravure unit at the first moment and at the plurality of moments prior to the first moment, and the control volumes of the at least one previous gravure unit of the current gravure unit at the first moment and at the plurality of moments prior to the first moment, and an output of the error prediction model is the predicted register error of the current gravure unit at the second moment.

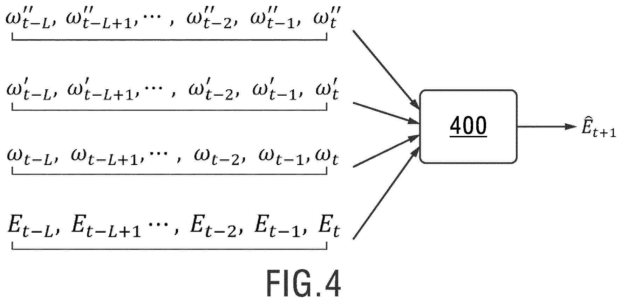

FIG. 4 is a schematic diagram of an error prediction model in an embodiment of the present disclosure. As shown in FIG. 4, the inputs of the error prediction model 400 may include a control volume sequence $(\omega_{t-L}, \omega_{t-L+1}, \cdots, \omega_{t-2}, \omega_{t-1}, \omega_t)$ of the current gravure unit $U_k$, a control volume sequence $(\omega'_{t-L}, \omega'_{t-L+1}, \cdots, \omega'_{t-2}, \omega'_{t-1}, \omega'_t)$ of the previous gravure unit $U_{k-1}$, a control volume sequence $(\omega''_{t-L}, \omega''_{t-L+1}, \cdots, \omega''_{t-2}, \omega''_{t-1}, \omega''_t)$ of the previous gravure unit $U_{k-2}$, and an error sequence $(E_{t-L}, E_{t-L+1} \cdots, E_{t-2}, E_{t-1}, E_t)$ of the current gravure unit $U_k$, and an output of the error prediction model 400 is a predicted register error $\hat{E}_{t+1}$ of the current gravure unit $U_k$ at the second moment.

It should be noted that, in the embodiment and subsequent embodiments of the present disclosure, the moment t is the first moment, and the moment t+1 is the second moment. Therefore, $\omega_t$ is a control volume of the current gravure unit $U_k$ at the first moment, $\omega'_t$ is a control volume of the previous gravure unit $U_{k-1}$ at the first moment, $\omega''_t$ is a control volume of the previous gravure unit $U_{k-2}$ at the first moment, and $E_t$ is a register error of the current gravure unit $U_k$ at the first moment.

In the embodiment of the present disclosure, the intermediate model is determined as the error prediction model for predicting the register error of the current gravure unit at the second moment. No transformation of the intermediate model is needed, thereby shortening the duration for acquiring the error prediction model, and improving the efficiency of acquiring the error prediction model.

In a possible implementation, when the intermediate model is determined as the error prediction model, a recursion formula of the error prediction model may be formula (1) or formula (2) as follows:

$$H_t = \emptyset(X_t W_{xh} + H_{t-1} W_{hh} + b_h) \qquad (1)$$

$$\hat{E}_{t+1} = H_t W_{ho} + b_o \qquad (2)$$

$\hat{E}_{t+1}$ represents a predicted register error of the current gravure unit at the moment $t + 1$, $\emptyset(\ )$ represents an activation function, $X_t$ represents an input vector composed of the control volume and the register error of the current gravure unit at the moment t, and the control volume of the at least one previous gravure unit of the current gravure unit at the moment t, $H_t$ represents a hidden variable of the error prediction model at the moment $t$, $H_{t-1}$ represents a hidden variable of the error prediction model at the moment $t - 1$, $W_{xh}$ represents a weight matrix of a hidden variable connecting an input vector, $W_{hh}$ represents a weight matrix of a hidden variable connecting itself, $W_{ho}$ represents a weight matrix of a predicted register error connecting a hidden variable, and $b_h$ and $b_o$ are each a constant.

As shown in FIG. 4, the inputs of the error prediction model 400 include the control volume sequence $(\omega_{t-L}, \omega_{t-L+1}, \cdots, \omega_{t-2}, \omega_{t-1}, \omega_t)$ of the current gravure unit $U_k$, the control volume sequence $(\omega'_{t-L}, \omega'_{t-L+1}, \cdots, \omega'_{t-2}, \omega'_{t-1}, \omega'_t)$ of the previous gravure unit $U_{k-1}$, the control volume sequence $(\omega''_{t-L}, \omega''_{t-L+1}, \cdots, \omega''_{t-2}, \omega''_{t-1}, \omega''_t)$ of the previous gravure unit $U_{k-2}$, and the error sequence $(E_{t-L}, E_{t-L+1} \cdots, E_{t-2}, E_{t-1}, E_t)$ of the current gravure unit $U_k$. $X_{t-L}$ including $\omega_{t-L}$, $\omega'_{t-L}$, $\omega''_{t-L}$, and $E_{t-L}$ is substituted into the above formula (1) to obtain $H_{t-L}$, $H_{t-L}$ and $X_{t-L+1}$ including $\omega_{t-L+1}$, $\omega'_{t-L+1}$, $\omega''_{t-L+1}$, and $E_{t-L+1}$ are substituted into the above formula (1) to obtain $H_{t-L+1}$, ..., $H_{t-1}$ and $X_t$ including $\omega_t$, $\omega'_t, \ \omega''_t$, and $E_t$ are substituted into the above formula (1) to obtain $H_t$, and then $H_t$ is substituted into the above formula (2) to obtain $\hat{E}_{t+1}$.

When the register error of the current gravure unit at the second moment is predicted, the moment t+1 is the second moment, and the moment t is the first moment.

$W_{xh}$, $W_{hh}$, $W_{ho}$, $b_h$, and $b_o$ are all parameters of the intermediate model; $W_{xh}$, $W_{hh}$, and $W_{ho}$ may be determined by model training; and $b_h$ and $b_o$ may be determined by model training, or may be preset thresholds.

$H_{t-1}$ represents a hidden variable of the error prediction model at the moment $t$ - 1, that is, $H_{t-1}$ is obtained when the predicted register error of the current gravure unit at the moment $t$ is determined. $H_t$ represents a hidden variable of the error prediction model at the moment $t$, that is, $H_t$ is obtained when the predicted register error of the current gravure unit at the moment $t$ + 1 is determined, and $H_t$ can be used for determining the predicted register error of the current gravure unit at the moment $t$ + 2.

In the embodiment of the present disclosure, in the mathematical expression of the error prediction model, $W_{xh}$ represents a weight matrix of a hidden variable connecting an input vector, $W_{hh}$ represents a weight matrix of a hidden variable connecting itself, and $W_{ho}$ represents a weight matrix of a predicted register error connecting a hidden variable. The error prediction model computes the predicted register error of the current gravure unit at the current moment based on an input vector, a hidden variable at a last moment, and a hidden variable at the current moment, to ensure the accuracy of the determined predicted register error.

In a possible implementation, the error prediction model is obtained by performing equivalent differential transformation on the intermediate model. In this case, when the predicted register error of the current gravure unit at the second moment is determined via the error prediction model, inputs of the error prediction model may include a historical hidden variable, the control volume and the register error of the current gravure unit at the first moment, and the control volume of the at least one previous gravure unit of the current gravure unit at the first moment. An output of the error prediction model may include the predicted register error of the current gravure unit at the second moment, and a hidden variable corresponding to the second moment.

The historical hidden variable is outputted from the error prediction model when the register error of the current gravure unit at the first moment is predicted. That is, when the predicted register error of the current gravure unit at the first moment is determined via the error prediction model, the error prediction model will output the predicted register error of the current gravure unit at the first moment and the hidden variable corresponding to the first moment, while, when the predicted register error of the current gravure unit at the second moment is determined, a hidden variable corresponding to the first moment is a historical hidden variable relative to the second moment.

When the predicted register error of the current gravure unit at the second moment is determined, the error prediction model will output the predicted register error of the current gravure unit at the second moment, and the hidden variable corresponding to the second moment. The hidden variable corresponding to the second moment can be used for determining the predicted register error of the current gravure unit at a moment next to the second moment.

In the embodiment of the present disclosure, the error prediction model may be obtained by performing equivalent differential transformation on the intermediate model, so that the inputs of the error prediction model may include the historical hidden variable, the control volume and the register error of the current gravure unit at the first moment, and the control volume of the at least one previous gravure unit of the current gravure unit at the first moment. The relevant data of the current gravure unit and the previous gravure unit at the plurality of historical moments do not need to be inputted. In other words, only the latest state characteristic is needed, without the need for characteristic sequences, thereby improving the efficiency of register error prediction, and reducing the memory consumption in the process of register error prediction.

In a possible implementation, the previous gravure unit of the current gravure unit includes a first previous gravure unit and a second previous gravure unit, where the first previous gravure unit, the second previous gravure unit, and the current gravure unit are successively adjacent as per the printing sequence, and the first previous gravure unit is located between the second previous gravure unit and the current gravure unit.

As shown in FIG. 2, when the current gravure unit is the gravure unit $U_k$, the first previous gravure unit is the gravure unit $U_{k-1}$, and the second previous gravure unit is the gravure unit $U_{k-2}$.

On the premise that the error prediction model is obtained by performing equivalent differential transform on the intermediate model, when the predicted register error of the current gravure unit at the second moment is determined via the error prediction model, inputs of the error prediction model include the control volume and the register error of the current gravure unit at the first moment, the control volume of the first previous gravure unit at the first moment, the control volume of the second previous gravure unit at the first moment, and the historical hidden variable.

In the embodiment of the present disclosure, the previous gravure unit of the current gravure unit includes the first previous gravure unit adjacent to the current gravure unit, and the second previous gravure unit adjacent to the first previous gravure unit. When the predicted register error of the current gravure unit at the second moment is determined via the error prediction model, the control volume of the first previous gravure unit and the control volume of the second previous gravure unit at the first moment are used as partial inputs of the model, thereby reducing the computing workload of the error prediction model on the premise of ensuring the accuracy of the prediction result, improving the efficiency of register error prediction, and reducing the memory consumption in the process of register error prediction.

In a possible implementation, when the error prediction model is obtained by performing equivalent differential transform on the intermediate model, mathematical expression of the error prediction model may be formula (3), formula (4), and formula (5) as follows:

$$H_t = \emptyset \left( \begin{bmatrix} V_t & H_{t-1} & \omega_t \end{bmatrix} \begin{bmatrix} W_{vh} \\ W_{xh} \\ W_{\omega h} \end{bmatrix} + b_h \right) \qquad (3)$$

$$V_t = \begin{bmatrix} E_t \\ \omega_t'' \\ \omega_t' \end{bmatrix} \qquad (4)$$

$$\hat{E}_{t+1} = H_t W_{ho} + b_o \qquad (5)$$

$\hat{E}_{t+1}$ represents the predicted register error of the current gravure unit at the moment $t + 1$, $\emptyset(\ )$ represents an activation function, $E_t$ represents the register error of the current gravure unit at the moment $t$, $H_t$ represents a hidden variable outputted from the error prediction model when predicting $\hat{E}_{t+1}$, $H_{t-1}$ represents a hidden variable outputted from the error prediction model when predicting a to-be-predicted register error of the current gravure unit at the moment $t$, $\omega_t$ represents a control volume of the current gravure unit at the moment $t$, $\omega_t'$ represents a control volume of the first previous gravure unit at the moment $t$, $\omega_t''$ represents a control volume of the second previous gravure unit at the moment $t$, $\begin{bmatrix} W_{vh} \\ W_{xh} \\ W_{\omega h} \end{bmatrix}$ represents a weight matrix of a hidden variable of the error prediction model connecting an input vector, and $b_h$ and $b_o$ are each a constant.

When the predicted register error of the current gravure unit at the second moment is determined via the error prediction model shown in formula (3) to formula (5), $\hat{E}_{t+1}$ is the predicted register error of the current gravure unit at the second moment, $E_t$ is the register error of the current gravure unit at the first moment, $H_{t-1}$ is the hidden variable outputted from the error prediction model when predicting the predicted register error of the current gravure unit at the first moment, $H_t$ is the hidden variable outputted from the error prediction model when predicting the predicted register error of the current gravure unit at the second moment, $\omega_t$ is the control volume of the current gravure unit at the first moment, $\omega_t'$ is the control volume of the first previous gravure unit at the first moment, and $\omega_t''$ is the control volume of the second previous gravure unit at the first moment.

$W_{vh}$, $W_{xh}$, and $W_{\omega h}$ in the weight matrix $\begin{bmatrix} W_{vh} \\ W_{xh} \\ W_{\omega h} \end{bmatrix}$ can be combined by disassembling $W_{xh}$ in formula (1).

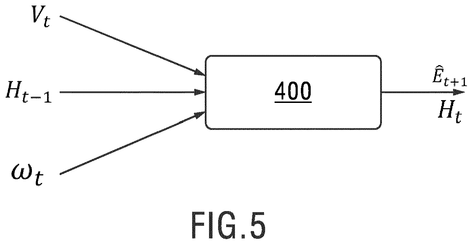

FIG. 5 is a schematic diagram of an error prediction model in another embodiment of the present disclosure. As can be appreciable from the error prediction model shown in formula (3) to formula (5) shown in FIG. 5, the inputs of the error prediction model 400 may include $V_t$, $H_{t-1}$, and $\omega_t$, while the outputs of the error prediction model 400 include $\hat{E}_{t+1}$ and $H_t$. $H_t$ can be used for determining the predicted register error of the current gravure unit at the moment next to the second moment.

In the embodiment of the present disclosure, the error prediction model is obtained by performing equivalent differential transform on the intermediate model. A mature nonlinear solving algorithm can be used to solve the error prediction model, thereby ensuring the accuracy of the obtained predicted register error, and improving the efficiency of model solving. The inputs of the error prediction model only need to include an eigenvector at the current moment, instead of a feature sequence corresponding to the plurality of historical moments, thereby improving the computing efficiency, and reducing the memory consumption.

In a possible implementation, when the control volume of the current gravure unit at the second moment is determined based on the predicted register error of the current gravure unit at the second moment, the register error of the current gravure unit at least one third moment following the second moment can be predicted via the error prediction model, to obtain the predicted register error of the current gravure unit at each of the third moment, and then determine the control volume of the current gravure unit at the second moment based on the predicted register error of the current gravure unit at the second moment and the predicted register error of the current gravure unit at each third moment.

When the predicted register error of the current gravure unit at the third moment is determined via the error prediction model, A control volume and a register error of the current gravure unit at a moment prior to the third moment are inputted. Since this moment is a future moment, it is impossible to obtain the register error of the current gravure unit at that moment via measurement. Therefore, the predicted register error of the gravure unit at that moment may be used as the register error at that moment, and the control volume of the gravure unit at that moment is determined based on the predicted register error of the current gravure unit at the moment prior to that moment. It should be noted that the process of determining the predicted register error and the control volume of the current gravure unit at the third moment is same as the method of determining the predicted register error and the control volume of the current gravure unit at the second moment, and will not be repeated here.

In the embodiment of the present disclosure, because the control volume of the current gravure unit at the second moment will affect a register error at a subsequent moment, the predicted register error of the current gravure unit at the second moment is determined and predicted register errors of the current gravure unit at a plurality of third moments following the second moment are determined via the error prediction model, and then the control volume of the current gravure unit at the second moment is determined based on the predicted register errors of the current gravure unit at the second moment and the third moments. When the control volume of the current gravure unit at the second moment is determined, the influence of the control volume at the second moment on the register error at the subsequent moment is considered, so as to stabilize the register error of the current gravure unit at a small level, and ensure that the printed product is of high quality.

In a possible implementation, a performance objective function shown in formula (6) below can be solved to obtain the control volume of the current gravure unit at the second moment.

$$J = \left(\hat{E}_{t+n+1} - E^*_{t'+n+1}\right)^2 + \sum_{t'=t}^{t+n-1} \left[\left(\hat{E}_{t'+1} - E^*_{t'+1}\right)^2 + \Delta\omega_{t'+1}^T R\Delta\omega_{t'+1} + \nabla\tilde{\omega}_{t'+1}^T Q\nabla\tilde{\omega}_{t'+1}\right] \quad (6)$$

$J$ represents a performance objective function of the current gravure unit at the second moment, $t$ represents the first moment, $t + 1$ represents the second moment, $n - 1$ represents the number of the third moments, n is a positive integer greater than or equal to 1, $\hat{E}_{t'+1}$ represents a predicted register error of the current gravure unit at a moment $t' + 1$, $E^*_{t'+1}$ represents a set value of the register error of the current gravure unit at the moment $t' + 1$, $\hat{E}_{t+n+1}$ represents a predicted register error of the current gravure unit at a moment $t + n + 1$, $E^*_{t'+n+1}$ represents a set value of a register error of the current gravure unit at a moment $t' + n + 1$, $\Delta\omega_{t'+1} = \omega_{t'+1} - \omega_{t'}$, $\nabla\tilde{\omega}_{t'+1} = \omega_{t'+1} - \omega'_{t'}$, $\omega_{t'+1}$ represents a control volume of the current gravure unit at the moment $t' + 1$, $\omega_{t'}$ represents a control volume of the current gravure unit at a moment $t'$, $\omega'_{t'}$ represents a control volume of a previous gravure unit adjacent to the current gravure unit at the moment $t'$, and R and $Q$ are each a penalty coefficient or matrix. The symbol T represents matrix transpose.

In the above formula (6), the target term $\sum_{t'=t}^{t+n-1}\left(\hat{E}_{t'+1} - E^*_{t'+1}\right)^2$ is indicative of an offset between the predicted register error and the set value of the register error, the penalty term $\sum_{t'=t}^{t+n-1}\Delta\omega_{t'+1}^T R\Delta\omega_{t'+1}$ is indicative of an increment of the control volume of the current gravure unit, the penalty term $\sum_{t'=t}^{t+n-1}\nabla\tilde{\omega}_{t'+1}^T Q\nabla\tilde{\omega}_{t'+1}$ is indicative of an increment of the control volume of the current gravure unit relative to the control volume of the previous gravure unit, and the terminal term $(\hat{E}_{t+n+1} - E^*_{t'+n+1})^2$ is indicative of an offset between a predicted register error at an end of a prediction period and the set value of the register error.

When the performance objective function shown in formula (6) is solved, the performance objective function is solved with the objective of minimizing , to obtain n control volumes from $\omega_{t+1}$ to $\omega_{t+n}$, $\omega_{t+1}$ is the control volume of the current gravure unit at the moment $t + 1$ , and $\omega_{t+n}$ is a control volume of the current gravure unit at a moment $t + n$. As the moment $t +$

1 is the second moment, $\omega_{t+1}$ is the control volume of the current gravure unit at the second moment. It should be noted that a rotational angular velocity of a gravure roller in the current gravure unit at the second moment can be controlled merely based on the solved $\omega_{t+1}$, or the rotational angular velocity of the gravure roller in the current gravure unit at the second moment can be controlled based on a plurality of the solved control volumes such as $\omega_{t+1}$ and $\omega_{t+2}$.

In the embodiment of the present disclosure, an error reference value is computed based on the target term

$$\sum_{t'=t}^{t+n-1}\left(\hat{E}_{t'+1} - E^*_{t'+1}\right)^2$$, the penalty term $$\sum_{t'=t}^{t+n-1}\Delta\omega_{t'+1}^T R\Delta\omega_{t'+1}$$, the penalty term

$$\sum_{t'=t}^{t+n-1}\nabla\widetilde{\omega}_{t'+1}^T Q\nabla\widetilde{\omega}_{t'+1}$$, and the terminal term $(\hat{E}_{t+n+1} - E^*_{t+n+1})^2$, and then the control volume of the current gravure unit at the second moment is determined based on the error reference value. In this manner, the intaglio printing system is enabled to have a small register error and the incremental change of the control volume is constrained, thereby preventing the substrate from being pulled apart due to excessive increment of the control volume, and improving the robustness of the intaglio printing system.

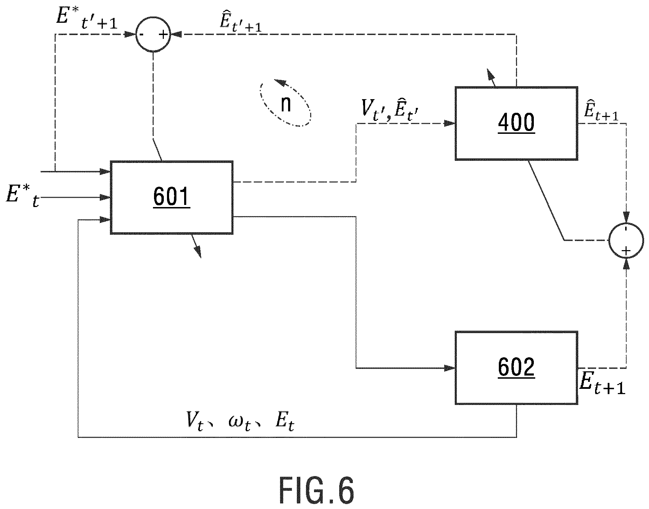

FIG. 6 is a schematic diagram of a register error control process in an embodiment of the present disclosure. As shown in FIG. 6, the error prediction model 400 will perform register error predictions n times under the control of a register error controller 601. With reference to the above formula (3) to formula (6), in the process of register error prediction, the register error controller 601 sends $V_{t'}$ and $\hat{E}_{t'}$ to the error prediction model 400. $\hat{E}_{t'+1}$ is inputtted into the error prediction model 400, and the offset between $\hat{E}_{t'+1}$ and $E^*_{t'+1}$ is inputted into the register error controller 601. The register error controller 601 may obtain $V_t$, $\omega_t$, and $E_t$ of a current gravure unit 602 at the first moment. Then, the register error controller 601 may determine the control volume $\omega^*_{t+1}$ of the current gravure unit 602 at the second moment based on $V_t$, $\omega_t$, $E_t$, $E^*_t$ and the offsets between a plurality of $\hat{E}_{t'+1}$ and $E^*_{t'+1}$, and then send $\omega^*_{t+1}$ to the current gravure unit 602, so that the current gravure unit 602 controls the gravure roller to rotate based on $\omega^*_{t+1}$. For example, the register error controller 601 solves the performance objective function shown in the above formula (6) with the objective of minimizing $J$, to obtain $\omega^*_{t+1}$.

After the second moment, the error prediction model 400 can be updated based on the real register error $E_{t+1}$ and the predicted register error $\hat{E}_{t+1}$ of the current gravure unit at the second moment, to continuously optimize the error prediction model 400, and improve the prediction accuracy of the error prediction model 400.

It should be noted that the model structure of the error prediction model may be, e.g., RNN, Gate Recurrent Unit (GRU), or Long Short-Term Memory (LSTM). The network structure of the error prediction model shown in the above formula (3) to formula (5) may be RNN.

Apparatus for controlling a register error

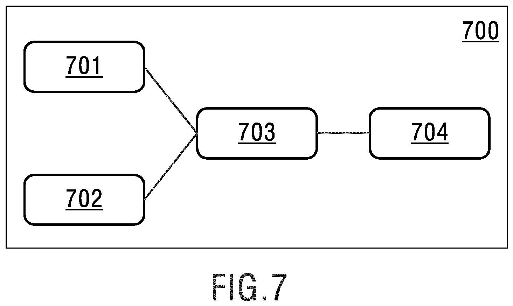

FIG. 7 is a schematic diagram of an apparatus for controlling a register error in an embodiment of the present disclosure. As shown in FIG. 7, the apparatus 700 for controlling a register error includes a first acquisition unit 701, a second acquisition unit 702, a prediction unit 703, and a prediction unit 703. The first acquisition unit 701 is configured to acquire a control volume and a register error of a current gravure unit at a first moment, the control volume being used for indicating a set value of a rotational angular velocity when the gravure unit is controlled to operate. The second acquisition unit 702 is configured to acquire a control volume of at least one previous gravure unit at the first moment, the previous gravure unit being located prior to the current gravure unit as per a printing sequence. The prediction unit 703 is configured to predict, via an error prediction model, a register error of the current gravure unit at a second moment based on the control volume and the register error of the current gravure unit at the first moment, and the control volume of the at least one previous gravure unit at the first moment, to obtain a predicted register error of the current gravure unit at the second moment, the second moment following the first moment. The control unit 704 is configured to determine a control volume of the current gravure unit at the second moment based on the predicted register error of the current gravure unit at the second moment.

In the embodiment of the present disclosure, the first acquisition unit 701 acquires a control volume and a register error of a current gravure unit at a first moment, the second acquisition unit 702 acquires a control volume of at least one previous gravure unit of the current gravure unit at the first moment, the prediction unit 703 can obtain a predicted register error of the current gravure unit at a second moment via the error prediction model based on data acquired by the first acquisition unit 701 and the second acquisition unit 702, and then the control unit 704 can determine a control volume of the current gravure unit at the second moment based on the predicted register error of the current gravure unit at the second moment, and control a rotational angular velocity of the current gravure unit at the second moment based on the determined control volume, thereby resulting in a small register error of the current gravure unit at the second moment. Constructed by data-driven modeling, the error prediction model can accurately characterize various factors caused by the register error and ensure the accuracy of the predicted register error. The control volume is determined based on the predicted register error, and then is used to control the rotational angular velocity of the current gravure unit at the second moment, thereby resulting in a small register error of the current gravure unit at the second moment, and improving the quality of printed products.

It should be noted that the content such as the interaction between the various parts in the above apparatus for controlling a register error is based on a same concept as the above embodiments of the method for controlling a register error, and the narration in the above embodiments of the method for controlling a register error may be referred to for specific contents and beneficial effects, which will not be repeated here.

Electronic device

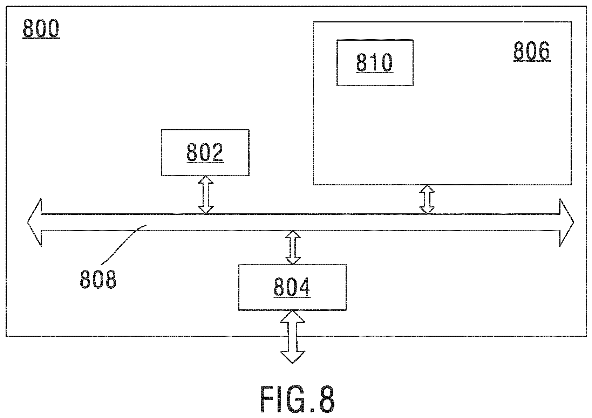

FIG. 8 is a schematic diagram of an electronic device provided in an embodiment of the present disclosure. Specific implementations of the electronic device are not limited in specific embodiments of the present disclosure. Referring to Fig. 8, the electronic device 800 provided in the embodiment of the present disclosure may include: a processor 802, a communication interface 804, a memory 806, and a bus 808. The processor 802, the communication interface 804, and the memory 806 are configured to communicate with each other through the bus 808. The communication interface 804 is configured to communicate with other electronic devices or servers. The processor 802 is configured to execute a program 810, and specifically may execute relevant steps of the method for controlling a register error in the above embodiments. Specifically, the program 810 may include program code. The program code includes computer operation instructions.

The processor 802 may be a central processing unit (CPU), or an Application Specific Integrated Circuit (ASIC), or one or more integrated circuits configured to implement embodiments of the present disclosure. One or more processors included in a smart device may be processors of a same type, e.g., one or more CPUs; or may be processors of different types, e.g., one or more CPUs and one or more ASICs.

The memory 806 is configured to store the program 810. The memory 806 may include a high-speed RAM memory, and may further include a non-volatile memory, e.g., at least one disk memory.

The program 810 may specifically be used for causing the processor 802 to execute the method for controlling a register error in any one of the above embodiments.

Corresponding description of the corresponding steps and units of the method for controlling a register error in the above embodiments may be referred to for specific implementations of the steps in the program 810, which will not be repeated here. Those skilled in the art can clearly understand that, for convenience and simplicity of description, the description of corresponding processes in the above method embodiments may be referred to for specific working processes of the above described devices and modules, which will not be repeated here.

An error prediction model that can predict a register error of a gravure unit is trained via the electronic device in the present embodiment, such that the error prediction model can obtain a predicted register error of a current gravure unit at a second moment based on a control volume and a register error of the current gravure unit at a first moment, and a control volume of at least one previous gravure unit of the current gravure unit at the first moment, further can determine a control volume of the current gravure unit at the second moment based on the predicted register error of the current gravure unit at the second moment, and control a rotational angular velocity of the current gravure unit at the second moment based on the determined control volume, thereby resulting in a small register error of the current gravure unit at the second moment. Constructed by data-driven modeling, the error prediction model can accurately characterize various factors caused by the register error and ensure the accuracy of the predicted register error, The control volume is determined based on the predicted register error, and then is used to control the rotational angular velocity of the current gravure unit at the second moment, thereby resulting in a small register error of the current gravure unit at the second moment, and improving the quality of printed products.

Computer-readable storage medium

The present disclosure further provides a computer-readable storage medium storing instructions for causing a machine to execute the method for controlling a register error as described herein. Specifically, a system or apparatus equipped with a storage medium may be provided, where the storage medium stores a software program code for implementing the functions of any one embodiment among the above embodiments, and makes a computer (or CPU or MPU) of the system or apparatus read and execute the program code stored in the storage medium.

In this case, the program code read from the storage medium itself can implement the functions of any one embodiment among the above embodiments, and thus the program code and the storage medium storing the program code constitute a part of the present disclosure.

Examples of storage mediums for providing the program code include a floppy disk, a hard disk, a magneto-optical disk, an optical disk (e.g., CD-ROM, CD-R, CD-RW, DVD-ROM, DVD-RAM, DVD-RW, or DVD+RW), a magnetic tape, a non-volatile memory card, and a ROM. Optionally, the program code may be downloaded from a server computer through a communication network.

In addition, it should be clear that a part or all of the actual operations may be completed not only by executing the program code read by the computer, but also by, e.g., an operating system operating on the computer based on instructions of the program code, thereby realizing the functions of any one embodiment among the above embodiments.

In addition, it is understandable that the program code read from the storage medium is written into a memory provided in an expansion board inserted into the computer or written into a memory provided in an expansion module connected to the computer, and then a part and all of the actual operations are executed by, e.g., a CPU installed on the expansion board or the expansion module based on the instructions of the program code, thereby realizing the functions of any one embodiment among the above embodiments.

Computer program product

Embodiments of the present disclosure further provide a computer program product. The computer program product is tangibly stored on a computer-readable medium, and includes computer-executable instructions, where the computer-executable instructions, when executed, cause at least one processor to execute the method for controlling a register error provided in the above embodiments. It should be understood that each solution in the present embodiment has corresponding technical effects in the above method embodiments, which will not be repeated here.

It should be noted that not all the steps and modules in the above processes and structural diagrams of the apparatus are necessary. Some steps or modules may be omitted based on actual requirements. The execution sequence of the steps is not constant, and may be adjusted as required. The system structure described in the above embodiments may be a physical structure or a logical structure, i.e., some modules may be implemented by a given physical entity, or may be implemented by a plurality of physical entities, or may be implemented together by some components in a plurality of standalone devices.

The nouns and pronouns about individuals in the present patent application are not limited to specific genders.

In the above embodiments, hardware modules may be implemented mechanically or electrically. For example, a hardware module may include a permanent dedicated circuit or logic (e.g., a dedicated processor, FPGA, or ASIC) to complete corresponding operations. The hardware module may further include a programmable logic or circuit (e.g., a general-purpose processor or other programmable processors), which may be temporarily set by software to complete corresponding operations. Specific implementations (mechanical or dedicated permanent circuit, or temporarily provided circuit) may be determined based on costs and time.

The present disclosure is shown and described in detail above with reference to the drawings and preferred embodiments. However, the present disclosure is not limited to these disclosed embodiments. Based on the above plurality of embodiments, those skilled in the art can know that the code review means in the above different embodiments may be combined to obtain more embodiments of the present disclosure. These embodiments are also encompassed within the scope of protection of the present disclosure.

**Claims**

1. A method for controlling a register error, comprising:

   acquiring a control volume and a register error of a current gravure unit at a first moment, the control volume being used for indicating a set value of a rotational angular velocity when the gravure unit is controlled to operate;
   acquiring a control volume of at least one previous gravure unit at the first moment, the previous gravure unit being located prior to the current gravure unit as per a printing sequence;
   predicting, via an error prediction model, a register error of the current gravure unit at a second moment based on the control volume and the register error of the current gravure unit at the first moment, and the control volume of the at least one previous gravure unit at the first moment,
   to obtain a predicted register error of the current gravure unit at the second moment, the second moment following the first moment; and
   determining a control volume of the current gravure unit at the second moment based on the predicted register error of the current gravure unit at the second moment.

2. The method according to claim 1, wherein the method further comprises:

   acquiring a first control volume sequence, wherein the first control volume sequence comprises control volumes of the current gravure unit at a plurality of historical moments, the historical moments preceding the first moment;
   acquiring a second control volume sequence, wherein the second control volume sequence comprises control volumes of each of the previous gravure unit at the plurality of historical moments;

acquiring a register error sequence, wherein the register error sequence comprises register errors of the current gravure unit at the plurality of historical moments;

obtaining an intermediate model by training an initial model with the first control volume sequence, the second control volume sequence, and the register error sequence as inputs of the initial model, and with a register error of the current gravure unit at a future moment as an output of the intermediate model; and

obtaining the error prediction model based on the intermediate model.

3. The method according to claim 2, wherein the obtaining the error prediction model based on the intermediate model comprises:

determining the intermediate model as the error prediction model.

4. The method according to claim 3, wherein a recursion formula of the error prediction model comprises:

$$H_t = \emptyset(X_t W_{xh} + H_{t-1} W_{hh} + b_h) \ ,$$

and

$$\hat{E}_{t+1} = H_t W_{ho} + b_o,$$

$\hat{E}_{t+1}$ representing a predicted register error of the current gravure unit at a moment $t + 1$, $\emptyset()$ representing an activation function, $X_t$ representing an input vector composed of a control volume and a register error of the current gravure unit at a moment t, and a control volume of the at least one previous gravure unit at the moment t, $H_t$ representing a hidden variable of the error prediction model at the moment $t$, $H_{t-1}$ representing a hidden variable of the error prediction model at a moment $t$-1, $W_{xh}$ representing a weight matrix of a hidden variable connecting an input vector, $W_{hh}$ representing a weight matrix of a hidden variable connecting itself, $W_{ho}$ representing a weight matrix of a predicted register error connecting a hidden variable, and $b_h$ and $b_o$ each being a constant.

5. The method according to claim 2, wherein

the obtaining the error prediction model based on the intermediate model comprises: performing equivalent differential transform on the intermediate model to obtain the error prediction model; and

the predicting, via the error prediction model, the register error of the current gravure unit at the second moment based on the control volume and the register error of the current gravure unit at the first moment, and the control volume of the at least one previous gravure unit at the first moment, to obtain the predicted register error of the current gravure unit at the second moment, comprises:

acquiring a historical hidden variable outputted from the error prediction model, wherein the historical hidden variable is outputted from the error prediction model when predicting the register error of the current gravure unit at the first moment; and

inputting the control volume and the register error of the current gravure unit at the first moment, the control volume of the at least one previous gravure unit at the first moment, and the historical hidden variable into the error prediction model, to obtain the predicted register error and a hidden variable of the current gravure unit at the second moment outputted from the error prediction model.

6. The method according to claim 5, wherein the at least one previous gravure unit comprises a first previous gravure unit and a second previous gravure unit, wherein the first previous gravure unit, the second previous gravure unit, and the current gravure unit are successively adjacent as per the printing sequence, and the first previous gravure unit is located between the second previous gravure unit and the current gravure unit.

7. The method according to claim 6, wherein the error prediction model comprises:

$$H_t = \emptyset\left( \begin{bmatrix} V_t & H_{t-1} & \omega_t \end{bmatrix} \begin{bmatrix} W_{vh} \\ W_{xh} \\ W_{\omega h} \end{bmatrix} + b_h \right) \ ,$$

$$V_t = \begin{bmatrix} E_t \\ \omega_t'' \\ \omega_t' \end{bmatrix} \; ,$$

and

$$\hat{E}_{t+1} = H_t W_{ho} + b_o \; ,$$

$\hat{E}_{t+1}$ representing a predicted register error of the current gravure unit at a moment $t + 1$, $\emptyset(\ )$ representing an activation function, $E_t$ representing a register error of the current gravure unit at a moment $t$, $H_t$ representing a hidden variable outputted from the error prediction model when predicting $\hat{E}_{t+1}$, $H_{t-1}$ representing a hidden variable outputted from the error prediction model when predicting a to-be-predicted register error of the current gravure unit at a moment t, $\omega_t$ representing a control volume of the current gravure unit at a moment $t$, $\omega_t'$ representing a control volume of the first previous gravure unit at the moment $t$, $\omega_t''$ representing a control volume of the second previous gravure unit at the moment $t$, $\begin{bmatrix} W_{vh} \\ W_{xh} \\ W_{\omega h} \end{bmatrix}$ representing a weight matrix of a hidden variable of the error prediction model connecting an input vector, and $b_h$ and $b_o$ each being a constant.

8. The method according to claim 1, wherein the determining the control volume of the current gravure unit at the second moment based on the predicted register error of the current gravure unit at the second moment comprises:

predicting, via the error prediction model, a register error of the current gravure unit at at least one third moment following the second moment, to obtain a predicted register error of the current gravure unit at each of the third moment, wherein when predicting a predicted register error of the current gravure unit at the third moment, a register error of the current gravure unit at a moment prior to the third moment is the predicted register error at that moment, and a control volume of the current gravure unit at the moment prior to the third moment is a control volume determined based on the predicted register error at that moment; and
determining the control volume of the current gravure unit at the second moment based on the predicted register error of the current gravure unit at the second moment and the predicted register error of the current gravure unit at the at least one third moment.

9. The method according to claim 8, wherein the determining the control volume of the current gravure unit at the second moment based on the predicted register error of the current gravure unit at the second moment and the predicted register error of the current gravure unit at the at least one third moment comprises:
solving a performance objective function below, to obtain the control volume of the current gravure unit at the second moment :

$$J = (\hat{E}_{t+n+1} - E^*{}_{t'+n+1})^2 + \sum_{t'=t}^{t+n-1} [(\hat{E}_{t'+1} - E^*{}_{t'+1})^2 + \Delta\omega_{t'+1}^T R\Delta\omega_{t'+1} +$$

$$\nabla\widetilde{\omega}_{t'+1}^T Q \nabla\widetilde{\omega}_{t'+1}] \; ,$$

$J$ representing a performance objective function of the current gravure unit at the second moment, $t$ representing the first moment, $t + 1$ representing the second moment, $n - 1$ representing a number of the third moments, n being a positive integer greater than or equal to 1, $\hat{E}_{t'+1}$ representing a predicted register error of the current gravure unit at a moment $t' + 1$, $E^*_{t'+1}$ representing a set value of the register error of the current gravure unit at the moment $t' + 1$, $\hat{E}_{t+n+1}$ representing a predicted register error of the current gravure unit at a moment $t + n + 1$, $E^*{}_{t'+n+1}$ representing a set value of a register error of the current gravure unit at a moment $t' + n + 1$ , $\Delta\omega_{t'+1} = \omega_{t'+1} - \omega_{t'}$ , $\nabla\widetilde{\omega}_{t'+1} = \omega_{t'+1} - \omega_{t'}'$, and $\omega_{t'+1}$ representing control volumes of the current gravure unit at the moment $t' + 1$ , $\omega_{t'}$ representing a control volume of the current gravure unit at a moment $t'$, $\omega_{t'}'$ representing a control volume of a previous gravure unit adjacent to the current gravure unit at the moment t', and R and $Q$ each being a penalty coefficient or matrix.

10. An electronic device (800), comprising: a processor (802), a communication interface (804), a memory (806), and a bus (808), wherein the processor (802), the communication interface (804), and the memory (806) are configured to communicate with each other through the bus (808); and
the memory (806) is configured to store at least one executable instruction, wherein the at least instruction is executed to cause the processor (802) to execute operations corresponding to the method for controlling a register error according to any one of claims 1-9.

11. A computer-readable storage medium, storing computer instructions thereon, wherein the computer instructions, when executed by a processor, cause the processor to execute the method according to any one of claims 1-9.

12. A computer program product, being tangibly stored on a computer-readable medium and comprising computer-executable instructions, wherein the computer-executable instructions, when executed, cause at least one processor to execute the method according to any one of claims 1-9.

100

```
┌─────────────────────────────────┐
│               101               │
└─────────────────────────────────┘
                 │
                 ▼
┌─────────────────────────────────┐
│               102               │
└─────────────────────────────────┘
                 │
                 ▼
┌─────────────────────────────────┐
│               103               │
└─────────────────────────────────┘
                 │
                 ▼
┌─────────────────────────────────┐
│               104               │
└─────────────────────────────────┘
```

FIG.1

FIG.2

300

| 301 |
|-----|

| 302 |
|-----|

| 303 |
|-----|

| 304 |
|-----|

| 305 |
|-----|

FIG.3

$$\omega''_{t-L}, \; \omega''_{t-L+1}, \cdots, \; \omega''_{t-2}, \; \omega''_{t-1}, \; \omega''_t$$

$$\omega'_{t-L}, \; \omega'_{t-L+1}, \cdots, \; \omega'_{t-2}, \; \omega'_{t-1}, \; \omega'_t$$

$$\omega_{t-L}, \; \omega_{t-L+1}, \cdots, \; \omega_{t-2}, \; \omega_{t-1}, \omega_t$$

$$E_{t-L}, \; E_{t-L+1} \cdots, \; E_{t-2}, \; E_{t-1}, \; E_t$$

$$\underline{400} \longrightarrow \hat{E}_{t+1}$$

## FIG.4

$V_t$

$H_{t-1}$

$\omega_t$

400

$\hat{E}_{t+1}$

$H_t$

FIG.5

$E^*_{t'+1}$       $\hat{E}_{t'+1}$

$-$   $+$

n

$V_{t'}, \hat{E}_{t'}$   **400**   $\hat{E}_{t+1}$

$E^*_t$    **601**

$-$   $+$

**602**   $E_{t+1}$

$V_t \text{、} \omega_t \text{、} E_t$

## FIG.6

700

701

702

703

704

FIG.7

FIG.8

Europäisches
Patentamt

European
Patent Office

Office européen
des brevets

## EUROPEAN SEARCH REPORT

**Application Number**

**EP 23 21 1472**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2009 005821 A1 (BOSCH GMBH ROBERT [DE]) 29 July 2010 (2010-07-29) * figures 1-4 * * paragraphs [0017], [0039] - [0054] * ----- | 1-12 | INV. B41F13/12 B41F13/02 B41F33/00 B41F9/02 B65H23/04 |
| A | CN 100 551 698 C (FUJI KIKAI KOGYO KK [JP]) 21 October 2009 (2009-10-21) * the whole document * ----- | 1-12 | |
| A | US 2011/137451 A1 (SCHULTZE STEPHAN [DE] ET AL) 9 June 2011 (2011-06-09) * the whole document * ----- | 1-12 | |
| A | US 2009/211473 A1 (PETERS KLAUS [DE] ET AL) 27 August 2009 (2009-08-27) * the whole document * ----- | 1-12 | |

**TECHNICAL FIELDS SEARCHED (IPC)**

B41F
B65H

The present search report has been drawn up for all claims

| Place of search | Date of completion of the search | Examiner |
|---|---|---|
| Munich | 19 March 2024 | Hajji, Mohamed-Karim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 559 680 A1**

## ANNEX TO THE EUROPEAN SEARCH REPORT
## ON EUROPEAN PATENT APPLICATION NO.

EP 23 21 1472

19−03−2024

| Patent document cited in search report | | Publication date | Patent family member(s) | | Publication date |
|---|---|---|---|---|---|
| DE 102009005821 | A1 | 29−07−2010 | NONE | | |
| CN 100551698 | C | 21−10−2009 | CN | 1974213 A | 06−06−2007 |
| | | | KR | 20070043647 A | 25−04−2007 |
| | | | TW | I359082 B | 01−03−2012 |
| US 2011137451 | A1 | 09−06−2011 | AU | 2009275534 A1 | 04−02−2010 |
| | | | CN | 102112315 A | 29−06−2011 |
| | | | DE | 102008035639 A1 | 04−02−2010 |
| | | | JP | 2011529588 A | 08−12−2011 |
| | | | US | 2011137451 A1 | 09−06−2011 |
| | | | WO | 2010012335 A1 | 04−02−2010 |
| US 2009211473 | A1 | 27−08−2009 | CN | 101189128 A | 28−05−2008 |
| | | | DE | 102005019566 A1 | 09−11−2006 |
| | | | EP | 1924435 A2 | 28−05−2008 |
| | | | KR | 20080005934 A | 15−01−2008 |
| | | | US | 2009211473 A1 | 27−08−2009 |
| | | | WO | 2006114317 A2 | 02−11−2006 |

EPO FORM P0459